# EUROPÄISCHE PATENTSCHRIFT

(11) **EP 0 930 011 B1**
(45) Veröffentlichungstag und Bekanntmachung des Hinweises auf die Patenterteilung: **12.12.2001**
(21) Anmeldenummer: 99630008.3
(22) Anmeldetag: 15.01.1999
(51) Int. Cl.: A01L 7/04, A01L 7/06

(54) **Hufeisen mit Hufstollen**
Horseshoe with studs
Fer à cheval avec des crampons

(30) Priorität: 16.01.1998 LU 90197
(43) Veröffentlichungstag der Anmeldung: 21.07.1999
(73) Patentinhaber: Diederich, Carlo, 2410 Luxemburg (LU)
(72) Erfinder: Diederich, Carlo, 2410 Luxemburg (LU)
(74) Vertreter: Weydert, Robert

(56) Entgegenhaltungen:
- DE-U- 9 303 266
- GB-A- 198 409
- US-A- 3 548 947

## Beschreibung

Die Erfindung betrifft ein Hufeisen mit mindestens einem daran festgeschraubten Hufstollen und ein Verfahren zum Festschrauben eines Hufstollens an einem Hufeisen.

Es ist im Stand der Technik üblich, den Hufstollen als Stiftschraube auszubilden, wobei der Schraubenkopf den Hufstollen selbst bildet und ein Gewindeansatz des Hufstollens in eine Gewindebohrung des Hufeisens eingeschraubt ist. Es hat sich als außerordentlich schwierig erwiesen, die bekannten als Stiftschraube ausgebildeten Hufstollen an einem am Pferdefuß befestigten Hufeisen anzubringen, da die Gewindebohrung im Hufeisen nicht einfach von angesammeltem Schmutz zu befreien ist, damit der Gewindeansatz des Hufstollens eingeschraubt werden kann. Bei abgenutztem Hufeisen kann die Stiftschraube des Hufstollens auf der gegenüberliegenden Seite des Hufeisens austreten und zu Druckstellen oder anderen Verletzungen des Pferdefußes führen. Schließlich ist es auch schwierig, einen abgebrochenen Hufstollen zu ersetzen, da der in der Gewindebohrung zurückbleibende Gewindeansatz nicht ohne weiteres zu entfernen ist.

Die Druckschrift DE-U-9303266 zeigt ein Hufeisen mit gewindelosen Bohrungen zur Befestigung von Hufstollen am Hufeisen. Die Stollen sind als Muttern ausgeführt, welche einen Schraubkonus in die konische Öffnung eines dem Durchmesser der Bohrungen angepassten Spannstückes hineinzuziehen vermögen und dabei das Spannstück in der Hufeisenbohrung spreizen. Die gewindelosen Bohrungen sind auch nicht ganz einfach zu reinigen, damit ein Hufstollen befestigt werden kann und ausserdem ist der Hufstollen dreiteiilig und damit aufwendig in der Herstellung.

Aufgabe der Erfindung ist es, eine verbesserte Befestigung des Hufstollens am Hufeisen zu schaffen, welche die oben erwähnten Nachteile nicht aufweist.

Um diese Aufgabe zu lösen, schafft die Erfindung ein Hufeisen mit mindestens einem daran festgeschraubten Hufstollen, wobei der Hufstollen mittels einer Durchgangsschraube befestigt ist, deren Kopf auf einer Seite des Hufeisens liegt und deren Gewindeschaft auf der anderen Seite des Hufeisens in eine Gewindebohrung des Hufstollens eingeschraubt ist, dadurch gekennzeichnet, dass der Schaft der Schraube durch einen Schlitz des Hufeisens ragt, welcher seitlich zu einer Kantenfläche des Hufeisens offen ist und durch den die Schraube quer zu ihrer Längsrichtung einsetzbar ist.

Die Erfindung schafft auch ein Verfahren zum Festschrauben eines Hufstollens an einem Hufeisen mittels einer Durchgangsschraube mit einem Gewindeschaft und einem Kopf, wobei zuerst die Schraube in das Hufeisen eingesetzt wird und anschliessend der Hufstollen auf den Gewindeschaft auf der dem Schraubenkopf gegenüberliegenden Seite des Hufeisen aufgeschraubt wird, dadurch gekennzeichnet, dass der Schaft der Schraube quer zu seiner Längsrichtung in einen Schlitz des Hufeisens eingesetzt wird, der seitlich zu einer Kantenfläche des Hufeisens offen ist.

Der seitliche Schlitz läßt sich einfach von Verunreinigungen befreien und die Befestigungsschraube für den Hufstollen kann dann seitlich eingeführt werden. Eine Druckstelle am Fuß des Pferdes kann nicht mehr auftreten, da bei abgenutztem Hufeisen die Schraube nicht auf der dem Hufstollen gegenüberliegenden Seite des Hufeisens herausragen kann. Auch ein abgebrochener Hufstollen oder eine abgebrochene Befestigungsschraube läßt sich einfach ersetzen.

Schließlich ist die Herstellung des Hufeisens selbst auch vereinfacht, da im Hufeisen keine Gewindebohrung einzuarbeiten ist. Entsprechend bevorzugten Ausführungsformen kann die Schraube eine Senkkopfschraube sein, die mit ihrem Kopf in einer Versenkung des Hufeisens liegt. Die Gewindebohrung des Hufstollens kann eine Sackbohrung sein. Der Hufstollen kann eine ringförmige Schneidkante um die Gewindebohrung aufweisen, die beim Festschrauben in das Hufeisenmaterial eindringt, um so eine starre unverrückbare Befestigung zu gewährleisten. Vorzugsweise mündet der Schlitz seitlich in die innere Kantenfläche des Hufeisens und die Schlitzbreite entspricht etwa dem Durchmesser des Gewindeschaftes.

Die Erfindung wird im folgenden ausführlicher beschrieben mit Bezug auf die beiliegenden Zeichnungen, zeigen:
die Figuren 1A, 1B und 1C ein Hufeisen mit einem bekannten, als Stiftschraube ausgebildetem Hufstollen, und
die Figuren 2A, 2B und 2C ein Hufeisen mit der erfindungsgemäßen Befestigung des Hufstollens durch eine vom Hufstollen separate Befestigungsschraube.

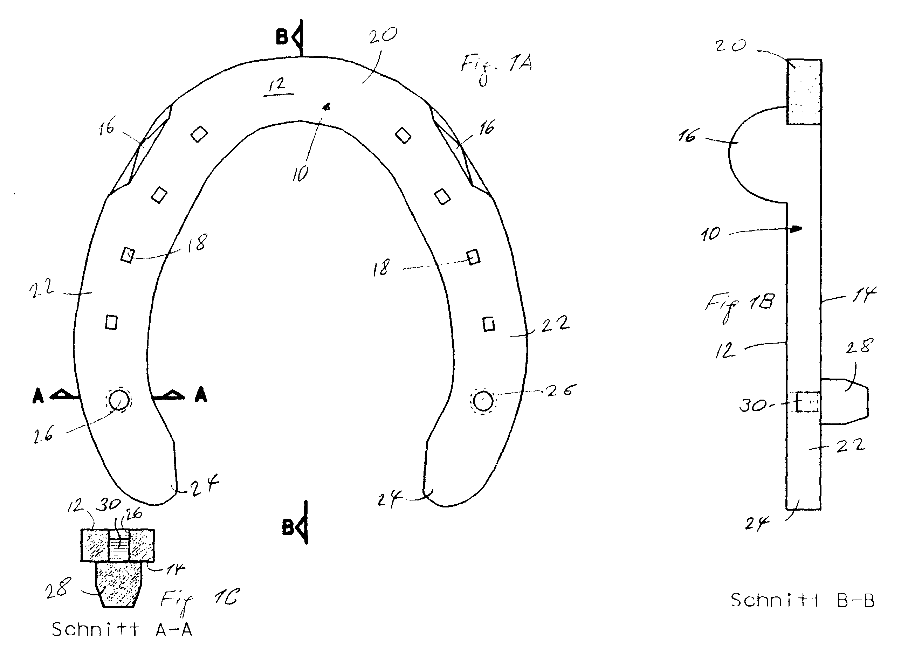

Das in den Figuren 1A, 1B und 1C dargestellte Hufeisen 10 hat eine erste oder obere Seite 12 und eine zweite oder untere Seite 14. Auf der oberen Seite des Hufeisens 12 sind zwei Positionieransätze 16 vorgesehen zur richtigen Positionierung des Hufeisens 12 am Pferdefuß. Das Hufeisen ist C-förmig ausgebildet, wobei die Ansätze 16 sich in der Nähe des geschlossenen Endes 20 des Hufeisens befinden. Zwei Arme 22 ragen beidseitig vom geschlossenen Ende 20 bis zum offenen Ende 24 des Hufeisens. Jeder Arm ist mit einer Lochreihe 18 versehen zur Befestigung des Hufeisens am Fuß des Pferdes. Jeder Arm 22 hat in der Nähe des offenen Endes 24 des Hufeisens eine Gewindebohrung 26. Ein Hufstollen 28 ist über ein Gewindeansatz 30 am Hufeisen befestigt, wobei der Gewindeansatz 30 in die Gewindebohrung 26 eingeschraubt ist.

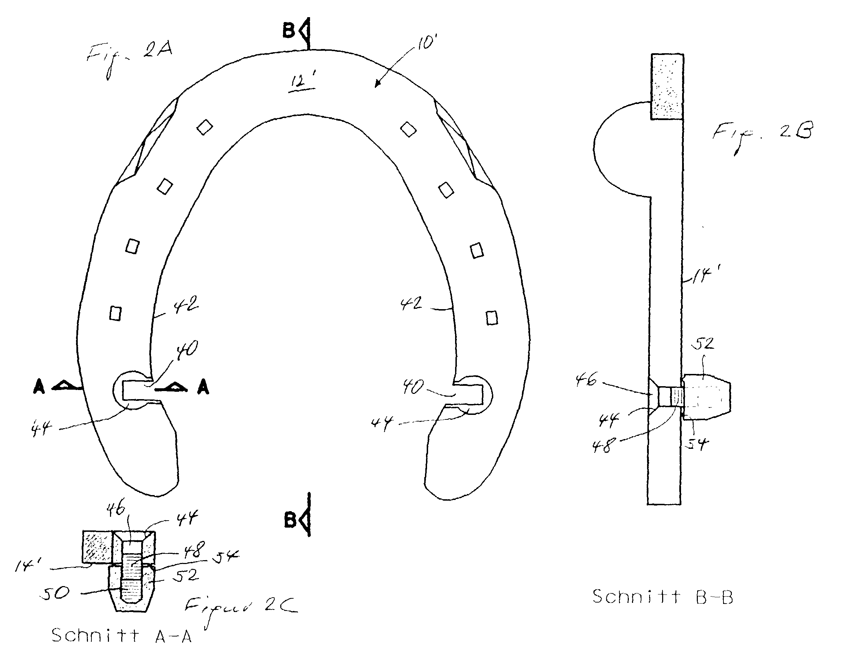

Das in den Figuren 2A bis 2C dargestellte Hufeisen 10' entspricht im wesentlichen dem Hufeisen 10 nach den Figuren 1A bis 1C mit Ausnahme der Befestigung des Hufstollens. Bei dem erfindungsgemäßen Hufeisen nach den Figuren 2A bis 2C ist die Gewindebohrung 26 des bekannten Hufeisens nach den Figuren 1A bis 1C durch einen Schlitz 40 ersetzt, der seitlich offen ist und in die innere Kantenfläche 42 des Hufeisens mündet. Der Schlitz 40 hat auf der ersten oder oberen Seite 12 des Hufeisens 10' eine kreisrunde Versenkung 44, in der der Kopf einer Senkschraube 46 aufgenommen ist. Die Senkschraube ist mit ihrem Gewindeschaft 48 in eine Gewindesackbohrung 50 des Hufstollens 52 eingeschraubt. Der Hufstollen 52 ist auf seiner der zweiten oder unteren Fläche 14 des Hufeisens zugewandten Seite mit einer Schneidkante 54 versehen, die beim Festschrauben des Hufstollens in das Material des Hufeisens eindringt. Durch die Senkkopfschraube und die Schneidkante 54 ist der Hufstollen unverstellbar am Hufeisen befestigt.

Die Senkkopfschraube 46 läßt sich einfach seitlich von der inneren Randfläche 42 des Hufeisens in den Schlitz 40 eines am Fuß des Pferdes befestigten Hufeisens einsetzen und anschließend kann der Hufstollen aufgeschraubt werden. Der seitlich offene Schlitz 40 kann einfach von angesammelten Verunreinigungen befreit werden.

## Patentansprüche

1. Hufeisen (10') mit mindestens einem daran festgeschraubten Hufstollen (52), wobei der Hufstollen (52) mittels einer Durchgangsschraube (46) befestigt ist, deren Kopf auf einer Seite des Hufeisens (10') liegt und deren Gewindeschaft (48) auf der anderen Seite des Hufeisens (10') in eine Gewindebohrung des Hufstollens (52) eingeschraubt ist, **dadurch gekennzeichnet, daß** der Schaft (48) der Schraube (46) durch einen Schlitz (40) des Hufeisens ragt, welcher seitlich zu einer Kantenfläche (42) des Hufeisens offen ist und durch den die Schraube (46) quer zu ihrer Längsrichtung einsetzbar ist.

2. Hufeisen (10') nach Anspruch 1, **dadurch gekennzeichnet, daß** die Schraube (46) eine Senkkopfschraube ist, die mit ihrem Kopf in einer Versenkung (44) des Hufeisens (10') liegt.

3. Hufeisen (10') nach Anspruch 1, oder 2, **dadurch gekennzeichnet, daß** die Gewindebohrung (50) des Hufstollens (52) eine Sackbohrung ist.

4. Hufeisen (10') nach einem der Ansprüche 1 bis 3, **dadurch gekennzeichnet, daß** der Hufstollen (52) eine ringförmige Schneidkante (54) um die Gewindebohrung (50) aufweist, die beim Festschrauben in das Hufeisenmaterial eindringt.

5. Hufeisen (10') nach einem der Ansprüche 1 bis 4, **dadurch gekennzeichnet, daß** der Schlitz (40) seitlich in die innere Kantenfläche (42) des Hufeisens (10') mündet und die Schlitzbreite etwa dem Durchmesser des Gewindeschaftes (48) entspricht,

6. Verfahren zum Festschrauben eines Hufstollens (52) an einem Hufeisen (10') mittels einer Durchgangsschraube (46) mit einem Gewindeschaft (48) und einem Kopf, wobei zuerst die Schraube (46) in das Hufeisen (10') eingesetzt wird und anschliessend der Hufstollen (52) auf den Gewindeschaft (48) auf der dem Schraubenkopf gegenüberliegenden Seite des Hufeisen (10') aufgeschraubt wird, **dadurch gekennzeichnet, dass** der Schaft (48) der Schraube (46) quer zu seiner Längsrichtung in einen Schlitz (40) des Hufeisens (10') eingesetzt wird, der seitlich zu einer Kantenfläche (42) des Hufeisens (10') offen ist.

## Claims

1. Horseshoe (10') having at least one stud (52) threadingly fixed thereto, said stud (52) being fixed by means of a through screw (46) who's head is located on one side of the horseshoe and whose threaded shaft (48) is threaded on the other side of the horseshoe (10') into a threaded bore of the stud, **characterized in that** the shaft (48) of the screw (46) extends through a slot (40) of the horseshoe which is laterally open towards one edge surface (42) of the horseshoe and through which the screw (46) is insertable transversally to its longitudinal direction.

2. Horseshoe (10') according to claim 1, **characterized in that** the screw (46) is a countersunk head screw having its head located in a recess of the horseshoe (10').

3. Horseshoe (10') according to claim 1 or 2, **characterized in that** the threaded bore (50) of the stud (52) is a blind bore.

4. Horseshoe (10') according to any one of claims 1 to 3, **characterized in that** the stud (52) has an annular cutting edge (54) about the threaded bore (50), said cutting edge being forced into the material of the horseshoe when the stud is threaded thereto.

5. Horseshoe (10') according to any one of claims 1 to 4, **characterized in that** the slot (40) opens laterally into the inner edge surface (42) of the horseshoe (10') and the slot width corresponds approximately to the diameter of the threaded shaft (48).

6. Method for threadingly fixing a stud (52) to a horseshoe (10') by means the through screw (46) having a threaded shaft (48) and a head, in which the screw (46) is first introduced into the horseshoe (10') and the stud (52) is then threaded onto the threaded shaft (48) on the side of the horseshoe (10') opposite the screw head, **characterized in that** the shaft (48) of the screw (46) is introduced transversally to its longitudinal direction into a slot (40) of the horseshoe (10'), said slot being open laterally to an edge surface (42) of the horseshoe (10').

## Revendications

1. Fer à cheval (10') avec au moins un crampon (52) serré à vis au fer à cheval, le crampon (52) étant serré au moyen d'une vis traversante (46) dont la tête est située sur l'un des côtés du fer à cheval (10') et dont la tige filetée (48) est vissée sur l'autre côté du fer à cheval (10') dans un alésage fileté du crampon (52), **caractérisé en ce que** la tige (48) de la vis (46) s'étend à travers une rainure (40) du fer à cheval, qui est ouverte latéralement vers une surface de chant (42) du fer à cheval et dans laquelle la vis (46) peut être introduite transversalement par rapport à sa direction longitudinale.

2. Fer à cheval (10') selon la revendication 1, **caractérisé en ce que** la vis (46) est une vis à tête encastrée reçue avec sa tête dans une cavité (44) du fer à cheval (10').

3. Fer à cheval (10') selon la revendication 1 ou 2, **caractérisé en ce que** l'alésage fileté (50) du crampon (52) est un alésage borgne.

4. Fer à cheval (10') selon une des revendications 1 à 3, **caractérisé en ce que** le crampon (52) a une arête tranchante annulaire (54) autour de l'alésage fileté (50), cette arête tranchante s'enfonçant dans le matériau du fer à cheval lors du serrage du crampon.

5. Fer à cheval (10') selon une des revendications 1 à 4, **caractérisé en ce que** la rainure (40) débouche latéralement dans la surface de chant interne (42) du fer à cheval (10') et la largeur de la rainure correspond approximativement au diamètre de la tige filetée (48).

6. Procédé pour la serrage à vis d'un crampon (52) à un fer à cheval (10') à l'aide d'une vis traversante (46) ayant une tige filetée (48) et une tête, selon lequel la vis (46) est d'abord introduite dans le fer à cheval (10') et ensuite le crampon (52) est vissé sur la tige filetée (48) du côté du fer à cheval (10') opposé à la tête de la vis, **caractérisé en ce que** la tige (48) de la vis (46) est introduite transversalement par rapport à sa direction longitudinale dans une rainure (40) du fer à cheval (10') qui débouche latéralement dans une surface de chant (42) du fer à cheval (10').
